# EUROPEAN PATENT SPECIFICATION

(11) **EP 4 299 298 B1**
(45) Date of publication and mention of the grant of the patent: **05.11.2025**
(21) Application number: 22181262.1
(22) Date of filing: 27.06.2022
(51) Int. Cl.: B29D 30/00, B60C 23/04

(54) **A METHOD OF ADHERING A DEVICE TO A TYRE**
VERFAHREN ZUM AUFKLEBEN EINER VORRICHTUNG AUF EINEN REIFEN
PROCÉDÉ D'ADHÉRENCE D'UN DISPOSITIF À UN PNEU

(43) Date of publication of application: 03.01.2024
(73) Proprietor: Bridgestone Europe NV/SA, 1930 Zaventem (BE)
(72) Inventor: Vecchione, Ciro, 00128 Roma (IT); Arends, Robin Frank, 00128 Roma (IT); PALUMBI, Maria Cecilia, 00128 Roma (IT)
(74) Representative: Marchetti, Alessio

(56) References cited:
- EP-A1- 0 924 112
- EP-A1- 1 614 552
- EP-A1- 3 135 508
- WO-A1-2013/050711
- WO-A1-2022/091150
- US-A1- 2008 216 566

## Description

### FIELD

The present disclosure relates to a method of adhering a device, such as a radio frequency identification patch, to a tyre.

### BACKGROUND

There are many advantages to being able to attach a device, such as a radio frequency identification (RFID) patch, to the inside of a tyre. Such devices may allow smart monitoring and communication with the tyre, which can provide many benefits. Tyre supply logistics can be improved, for example by tracking delivery of tyres, as well as managing stock levels. Devices can also facilitate improved vehicle monitoring, for example of the location or mileage of the tyre, which in turn can feed in to predictive maintenance of the tyre.

If a device detaches from a tyre, it may be unable to provide a monitoring and communication function, or the device may be lost entirely. In such cases, it is no longer possible to benefit from the functionality of the device. It is therefore important that devices are firmly and robustly adhered to the tyre to ensure the device is adhered to the tyre throughout the entire life cycle of the tyre.

In order to firmly adhere a device to a tyre, a uniform layer of adhesive is advantageous, which covers substantially all of, or the majority of, the device. It is also desirable for the amount of adhesive to be controlled, depending on the type of device and glue. Devices with uneven, too much, or too little adhesive will often result in an unreliable attachment to the tyre. Similarly, devices that have wrinkles or creases in them after being applied to a tyre will also have an unreliable attachment.

Applying devices to every tyre can be a time-consuming - and thus expensive - process, especially when devices are to be applied to large numbers of tyres. It is therefore also desirable to provide a method that reliably provides a secure attachment without the need for significant time or expensive equipment.

WO2022091150 discloses a tyre comprising a monitoring device which comprises a housing portion and a base portion, the base portion having a coupling surface in single piece intended for fixing the monitoring device to the tyre, wherein the monitoring device is fixed to an inner surface of the tyre at a crown portion of the tyre by an adhesive interposed between the coupling surface and the inner surface, wherein a first region of the coupling surface is covered by the adhesive and a second region of the coupling surface, complementary to the first region, is free of adhesive.

US2008216566 discloses a reusable tire pressure sensor assembly comprising a housing member having a first surface by means of which the housing member is permanently attachable to a surface within the pressurised region of a tire assembly.

### SUMMARY

It has been found that by adhering a device to a vulcanized tyre using the methods described herein, a robust attachment is formed in a time-efficient manner. The present disclosure ensures a correct amount of adhesive is present, resulting in a secure attachment without wasting glue and while maintaining the integrity of the device being adhered to the tyre. Importantly, the methods described herein overcome a number of the deficiencies with existing methods, which either suffer from a lack of adhesion, excessive glue use and discharge during attachment, or wrinkling or damage of the device as it is applied to a tyre.

According to the disclosure is a method of adhering a device to a tyre. The method comprises applying adhesive to a surface of the device and applying the device to a tyre. Applying adhesive may comprise applying an inner portion of adhesive to the surface of the device. Applying adhesive may further comprise applying an outer line of adhesive to the surface of the device. The outer line of adhesive may at least partially surround the inner portion of adhesive. Applying the device to the tyre may comprise applying pressure to the device. This may be to spread the inner portion and outer line of adhesive over the device for creating a uniform film of adhesive between the device and the tyre.

The device may be a patch.

The device may be configured to connect or support a secondary component, such as a sensor or communication component. The device may be for monitoring a characteristic of the tyre, such as temperature or internal pressure. The device may comprise a sensor, or may be configured to connect to or support a sensor. The device may be a support.

The device may be configured to store identification information for the tyre. The device may be configured to wirelessly communicate with a scanner.

The device may be a device for monitoring a characteristic of the tyre. The device may be a device for monitoring a characteristic of the tyre environment. Example characteristics may include temperature, pressure or other physical or chemical properties of the tyre. The device may be a radio frequency identification (RFID) patch. The device may provide a range of tracking, identification or monitoring functions to the tyre, greatly improving performance or logistical management of the tyre.

The device may be a holder type device, for example for holding a sensor.

The device may comprise an adhesion surface. The adhesion surface may be a surface of the device to which adhesive is applied and which is directly secured to the tyre.

The device may be adhered to a tyre using chemical adhesive such as glue. The adhesive may comprise, or be, a Cyanoacrylate. The adhesive may be Cyberbond 2240(TM) or Sigel 3M(TM). The adhesive may be applied to a surface of the device - for example as a liquid or gel - before the device is applied to the tyre. The adhesive may be allowed to cure or partially cure before the device is applied to the tyre. Allowing the adhesive to partially cure may improve the adhesion of the device to the tyre.

The inner portion of adhesive and outer line of adhesive may be the same adhesive. Using the same adhesive may simplify the process of applying the device to the tyre.

The method may use only a single type of adhesive, alternatively the inner portion and outer line of adhesive may be different adhesives. The different types of adhesive may have different properties - for example curing times. Using different types of adhesive may allow the user to benefit from the advantages of each type of adhesive.

The total amount of adhesive, in grams per surface area, applied to form the inner portion and outer line of adhesive combined may be between 0.3 and 0.6 g/dm². This amount of adhesive may provide an optimal adhesion strength while avoiding excessive glue, which can result in wastage as well as a reduction in adhesion strength.

When the adhesive is Cyberbond 2240(TM), the total amount of adhesive applied per unit area of the adhesive surface of the device may be between 0.3 and 0.5 g/dm². When the adhesive is Sigel 3M(TM), the total amount of adhesive applied per unit area of the adhesive surface of the device may be between 0.4 and 0.6 g/dm².

The inner portion of adhesive may be an inner line of adhesive.

The inner portion of adhesive may be applied on or along a centreline of the device. A centreline of the device may include a centre point or a circle (e.g. in the case of the device having a circular profile). The centreline of the device may be a longitudinal centreline.

The outer line of adhesive may be separate from the inner portion of adhesive. The outer line of adhesive may be distinct from the inner portion of adhesive.

The inner line and outer line may not be connected or intersect. They may be applied in separate steps or movements. The inner line of adhesive and outer line of adhesive may define a gap therebetween.

The outer line of adhesive may define a shape corresponding to the outer profile of the device.

Having a shape corresponding to the outer profile of the device may allow the outer line of adhesive to define a substantially constant distance between the outer line of adhesive and the outer edge of the device (e.g. the adhesion surface of the device). This may cause the adhesive of the outer line to be spread uniformly upon applying the device to the tyre, over the area between the outer line of adhesive and the outer edge of the device.

The device may be obround, circular, oval, polygonal or rectangular. Accordingly, the outer line of adhesive may be obround, circular, oval, polygonal or rectangular.

The outer line of adhesive may be an unbroken line.

The outer line of adhesive may entirely surround the inner portion of adhesive.

A line of adhesive (inner, or outer) may be a solid, unbroken line, or a broken or dashed line. An unbroken line of adhesive may facilitate a more even spread of adhesive upon application of the device to the tyre. A broken line of adhesive may allow the quantity of adhesive being applied be controlled, for example by controlling the number and spacing of line segments.

The outer line of adhesive may define a closed loop that encircles the inner portion of adhesive. This may facilitate a uniform application of adhesive over the adhesion surface after adhering the device to a tyre.

The outer line of adhesive may be arranged to spread over an outer portion of the device. The outer line of adhesive may be arranged spaced from the outer edge of the device. During application of the device to the tyre, the outer line of adhesive may spread over the area between the outer line of adhesive and the outer edge of the device to form a thin film. The size of the area between the outer line of adhesive and outer edge of the device may affect the ability of the adhesive to form a uniform thin film. If the outer line of adhesive is too close to the centre of the device, it may be unable to spread far enough to form a thin film over the entire adhesion surface. If the outer line of adhesive is too close to the edge of the device, adhesive may be expressed from between the device and the tyre as pressure is applied to the device.

The distance between the outer edge of the device and the outer line of adhesive may be greater than an eighth and less than three quarters of the distance between the outer edge of the device and the inner portion of adhesive.

The distance between the outer edge of the device and the outer line of adhesive may be greater than a quarter and less than a half of the distance between the outer edge of the device and the inner portion of the adhesive.

The outer line of adhesive may be located in a band that circumscribes the inner portion of adhesive. The band may extend circumferentially around the device, or the adhesion surface thereof.

Measured from the outer edge, the band may extend between an eighth and three-quarters of the distance from the outer edge of the device to the inner portion of adhesive. Measured from the outer edge, the band may extend between from a quarter to a half of the distance between the outer edge and the inner portion of adhesive. The outer line of adhesive may surround the inner portion of adhesive and be offset from the outer edge of the device by between a quarter and a half of the distance between the outer edge of the device and inner portion of adhesive.

The distance between the outer edge of the device and the outer line of adhesive may be approximately equal to 3/8 (three eighths) of the distance between the outer edge of the device and the inner portion of adhesive.

The amount of adhesive applied to form the inner portion of adhesive may be between 80% and 120% of the amount of adhesive applied to form the outer line of adhesive.

Substantially equal amounts of adhesive may be applied as the inner portion and outer line of adhesive. The inner portion and outer line of adhesive may be configured to spread to cover approximately the same surface area of the device, when adhered to the tyre. This provides a reliable method for achieving a substantially uniform adhesive layer.

In order to achieve a substantially equal amount of glue applied to form the inner line and outer line, the ratio of the amounts of glue applied for each line in grams per mm is inversely proportional to the lengths of the lines.

Applying the device to the tyre may comprise applying the device to an inside of the tyre. The device may be applied to an inside surface of the wall of a tyre.

Applying the device to the tyre may comprise first applying pressure to a centre of the device and moving the pressure outwards towards the outer edge of the device.

Initially applying pressure to a centre region of the device may comprise applying pressure to an area corresponding to that of the inner portion of adhesive. This may cause the inner portion of adhesive to spread over an inner area (e.g. half) of the device or adhesion surface thereof.

Subsequently moving the pressure outwards may cause the pressure to be moved towards, and eventually over, an area corresponding to the outer line of adhesive. This may cause the outer line of adhesive to spread, generally outwardly, towards the outer edge of the device. This may cause the outer line of adhesive to spread over an outer area (e.g. half) of the device.

Applying pressure in this manner in combination with applying adhesive in this manner may achieve a previously unattainable reliability in achieving a uniform thin film of adhesive.

Applying the device to the tyre may comprise applying between 80 and 120 kPa of pressure.

The pressure may be between 50 and 150 kPa, 80 and 120 kPa or 90 and 110 kPa. The pressure may be 100 kPa. The selected levels of pressure achieve a robust attachment of the device to the tyre.

Applying the device to the tyre may comprise applying the pressure for between 1 and 180 seconds.

Pressure may be applied for between 1 and 300 seconds, or 1 and 180 seconds, or between 3 and 90 seconds. Applying pressure for the selected durations provides a robust adherence.

Further according to the present disclosure is a method for manufacturing a tyre comprising a method for adhering a device to a tyre as described anywhere herein.

Further according to the disclosure is a tyre manufactured as described herein.

### BRIEF DESCRIPTION OF DRAWINGS

Figure 1 is a flow chart of a method of adhering a device to a tyre;
Figure 2 is a plan view of a RFID patch for adhering to a tyre;
Figure 3A is a plan view of a device for adhering to a tyre; and
Figure 3B is a side view of the device of Figure 3A adhered to a tyre.

### DETAILED DESCRIPTION OF DRAWINGS

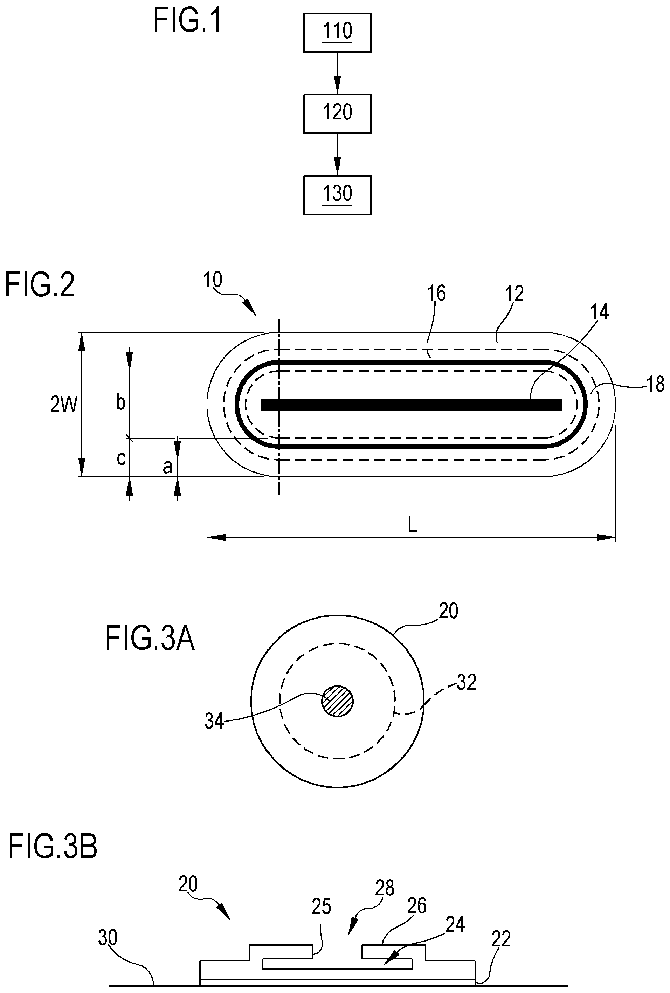

Figure 1 is a flow chart of a method of adhering a device to a tyre as disclosed herein. In the flow chart of Figure 1 a specific order of steps is shown, however it is to be understood that in other examples according to this disclosure, the order of certain steps may be different to that shown in Figure 1.

In a first step 110, a first portion of adhesive is applied to a surface of the device to be adhered to a tyre. This surface will typically be a generally flat underside of the device - for example a flat surface of an RFID patch (e.g. as shown in Figure 2), or an underside of a "holder" type device (e.g. as shown in Figure 3).

The adhesive is a liquid or gel adhesive that is applied to the device, for example by a glue gun. The adhesive is applied to the device shortly before application of the device to the tyre. Applying the adhesive in such a manner is quick and reliable.

The first portion of adhesive is an inner portion of adhesive and is applied towards the centre of the surface. The first portion of adhesive may be a line of adhesive or a single spot of adhesive. The first portion of adhesive may be applied on or along part or the whole of a centreline of the device.

In the present example, the first portion of adhesive is configured to cover a central portion of the area to be adhered during use. The first portion of adhesive is configured to spread over the central area of the device (e.g. the patch) after application of the device to the tyre, to form a thin film of adhesive to adhere that portion of the surface to the tyre. The first portion of adhesive is configured (e.g. located and portioned) to cover substantially half of the surface area to be adhered - e.g. half of the surface of the patch.

In some examples, the adhesive is Cyberbond 2240(TM) or Sigel 3M(TM).

In a second step 120, a second portion of adhesive is applied to the surface. The second portion is an outer line of adhesive. The outer line of adhesive is applied to at least partially surround the inner portion of adhesive.

In the present example, the outer line of adhesive is configured to cover an outer portion of the area to be adhered to the tyre, during use. The outer line of adhesive, is configured to spread over an outer area of the device (e.g. the patch) after application of the device to the tyre, to form a thin film of adhesive to adhere that portion of the surface to the tyre. The outer line of adhesive is configured (e.g. located and portioned) to cover substantially half of the surface area to be adhered - e.g. half of the surface of the patch.

The outer line of adhesive comprises substantially the same amount of adhesive as the inner portion of adhesive.

In the present example, between 0.3 and 0.6 g/dm² of adhesive are applied to the device.

Applying the adhesive in two distinct parts - the inner portion and outer line - allows the adhesive to be rapidly applied to the device, and provides an arrangement in which the adhesive is reliably spread over the adhesion surface.

The outer line of adhesive is the same adhesive as that of the inner portion of adhesive.

In some examples, and depending on the specific adhesive used, the device and adhesive may be left for the glue to cure for a period of time.

Once the adhesive has been applied to the device, and optionally allowed to cure, the method progresses to step 130 in which the device is applied to the tyre. The device may be applied by hand, or machine.

Applying the device to the tyre 130 comprises locating the device at the desired location and applying pressure to the device to secure it to the tyre. The pressure is applied to spread the inner portion and outer line of adhesive over the entire adhesion surface. The adhesive is spread to create uniform thickness of adhesive film between the device and tyre. A uniform thickness of adhesive film provides a more reliable and strong bond.

In order to create a uniform thickness of adhesive film, in the present example, pressure is first applied to a centre portion of the adhesion surface of the device and then moved outwards towards the outside of the device. This effects the spreading of the inner portion of adhesive from the centre of the adhesive surface, out towards the outer line of adhesive. The inner portion of adhesive provides a uniform thin film of adhesive over approximately 50% of the adhesion surface. The outer line of adhesive is then spread outwards towards the outer profile of the device. The outer line of adhesive forms a uniform thin film of adhesive over the remaining 50% of the adhesion surface.

Pressure is applied to the device for between 1 and 180 seconds. In this specific example, pressure is applied for between 3 and 90 seconds. The pressure applied to the device is between 80 and 120 kPa. Applying pressure for the correct amount of time, and with the correct amount of force, is important for achieving a robust bond between the device and the tyre.

Figure 2 shows an example of a device for use in the present disclosure. Figure 2 shows adhesive applied to an underside 12 of a device 10, for applying to a tyre in accordance with a method described herein.

The device 10 of Figure 2 is an RFID patch 10. The patch is planar and obround in shape. Figure 2 shows an underside 12 of the patch 10. The underside 12 is the adhesion surface of the patch, i.e. that which is to be secured to the tyre. Figure 2 shows the patch 10 before being applied to a tyre.

An inner portion 14 of adhesive has been applied to the patch 10. The inner portion 14 of adhesive in the present example is a line of adhesive along the centreline of the RFID patch 10. The centreline runs longitudinally along the middle of the patch 10. The amount of adhesive applied as the inner portion 14 is selected to cover substantially half of the underside 12 of the RFID patch 10 once the patch is applied to the tyre - an inner part of the adhesion surface of the RFID patch 10.

An outer line 16 of adhesive has been applied the underside 12 of the RFID patch 10. The outer line 16 of adhesive is an unbroken line of adhesive. The outer line 16 of adhesive entirely surrounds the inner portion 14 of adhesive. The amount of adhesive applied as the outer portion 16 is selected to cover substantially half of the underside of the RFID patch 10 once the patch is applied to the tyre - an outer circumferential portion of the RFID patch 10.

In the present example, the adhesive is Cyberbond 2240(TM) and a total amount of adhesive (i.e. including both the inner portion and outer line) is applied such that there is 0.3 - 0.5 g/dm² for the patch as a whole. Substantially half of this adhesive forms the inner portion and half forms the outer portion. As the inner portion and outer line of adhesive have substantially the same amount of adhesive, the ratio of the cross-sections of the inner portion of adhesive and outer line of adhesive (i.e. the widths multiplied by the thicknesses of the lines) are inversely proportional to the lengths of the two lines. In other words, the amount of glue applied per millimetre of line is inversely proportional to the lengths of the line.

**The outer** line 16 of adhesive has a profile (i.e. shape) corresponding to that of the outer profile of the patch 10. In the present example, the outer line 16 is obround in shape.

The outer line 16 of adhesive is applied within a band 18 of the underside 12 of the patch 10. The band 18 represents an area of the adhesion surface in which the outer line 16 can be applied and still achieve a substantially uniform film thickness once the device is applied to the tyre. The band 18 is a circumferential band located between the centre and the outer edge of the patch. The band 18 extends from a first distance *a* from the outer edge of the patch 10 to a second distance *c* from the outer edge of the patch 10. In the present example, where the total width of the patch is 2*W*, the band 18 extends from 0.25Wfrom the outer edge of the patch 10 to 0.5*W* from the outer edge of the patch - that is, the band 18 extends from an eighth of the total width of the patch from the outer edge, to a quarter of the total width of the patch from the outer edge.

To apply the patch 10 of Figure 2 to a tyre, the underside 12 is located against the tyre and pressure is applied to spread the inner line 14 and outer line 16 of adhesive into a uniform film of adhesive between the patch 10 and the tyre. Pressure is first applied towards the centre of the patch 10 i.e. corresponding to the location of the inner portion 14 of adhesive to spread the inner portion of adhesive. Pressure is then moved outwards towards the outer line 16 of adhesive, to spread the outer line 16 of adhesive towards the outer edge of the patch 10. Approximately 100 kPa of pressure is applied for approximately 60 seconds. The patch 10 is then adhered to the tyre.

Figure 3A is a bottom view of a second device 20 for adhering to a tyre. Figure 3B is a side view of the same device 20 adhered to a tyre 30.

The device 20 of Figures 3A and 3B is holder type device that is it is configured to support a secondary device or component. The device 20 is circular. The device 20 is substantially flat with a recess 28 configured to receive and hold a second device, such as a sensor (not shown), for example a TMS (Tyre Mounted Sensor). The recess comprises a cavity 24 within the body of the device 20 and an aperture 25 defined by a flange 26 of the device. The cavity is configured to receive part of the secondary component and the aperture 25 and flange 26 are configured to prevent the secondary component from inadvertently separating from the device 20 during use.

As shown in Figure 3A, adhesive is applied to an adhesion surface of the device (i.e. a surface to be adhered to the tyre 30). In this case, the adhesion surface is a flat underside of the device 20.

An inner portion 34 has been applied as a central blob or circular mass of adhesive. Substantially half of the total adhesive applied to the device 20 is applied as this central mass of adhesive. In other examples, the inner portion 34 of adhesive may be applied as a circular line of adhesive.

In Figure 3A, the outer line 32 of adhesive has been applied in a circular profile, corresponding to the outer profile of the device 20. The outer line 32 of adhesive is a broken, or dashed line. In other examples the outer line 32 may be a solid line of adhesive. In the example of Figure 3A, the outer line 32 of adhesive is located roughly one third of the way from the outer profile to the centre of the device 20. That is, the outer line of adhesive is spaced from the outer edge of the patch by about r/3, where *r* is the radius of the device 20.

The device 20 is applied to the surface of the tyre 30 by applying pressure to the device, to spread the inner portion and outer line of adhesive over substantially the entire adhesion surface in a substantially uniform film. Figure 3B shows the device 20 adhered to a tyre 30. A thin film of adhesive 22 can be seen between the device 20 and the tyre 30. The substantially uniform, thin film of adhesive 22 robustly secures the device onto the tyre 30.

The present invention has been described above purely by way of example. Modifications in detail may be made to the present invention within the scope of the claims as appended hereto. Furthermore, features from one example may be combined with an alternative example unless such a combination is explicitly precluded.

## Claims

1. A method of adhering a device (10, 20) to a tyre (30), the method comprising:
applying adhesive to a surface of the device (10, 20), wherein applying adhesive comprises:
applying an inner portion (14, 34) of adhesive to the surface of the device (10, 20); and
applying an outer line (16, 32) of adhesive to the surface of the device (10, 20), wherein the outer line (16, 32) of adhesive at least partially surrounds the inner portion (14, 34) of adhesive;
the method further comprising:
applying the device (10, 20) to the tyre (30), wherein applying the device (10, 20) to the tyre (30) comprises:
applying pressure to the device (10, 20) to spread the inner portion (14, 34) and outer line (16, 32) of adhesive over the device (10, 20) for creating a uniform film of adhesive between the device (10, 20) and the tyre (30).

2. The method of claim 1, wherein the inner portion of adhesive and outer line of adhesive are the same adhesive.

3. The method of claim 1 or claim 2, wherein the device is a radio frequency identification (RFID) patch, or a holder type device for holding a sensor.

4. The method of any of the preceding claims, wherein the inner portion of adhesive is an inner line of adhesive.

5. The method of any of the preceding claims, wherein the outer line of adhesive is separate and distinct from the inner portion of adhesive.

6. The method of any of the preceding claims, wherein the inner portion of adhesive is applied on or along a centreline of the device.

7. The method of any of the preceding claims, wherein the outer line of adhesive defines a shape corresponding to the outer profile of the device.

8. The method of any of the preceding claims, wherein the outer line of adhesive is an unbroken line that entirely surrounds the inner portion of adhesive.

9. The method of any of the preceding claims, wherein the distance between an outer edge of the device and the outer line of adhesive is greater than an eighth and less than three quarters of the distance between the outer edge of the device and the inner portion of adhesive.

10. The method of any of the preceding claims, wherein the amount of adhesive applied to form the inner portion of adhesive is between 80% and 120% of the amount of adhesive applied to form the outer line of adhesive.

11. The method of any of the preceding claims, wherein the total amount of adhesive, in grams per surface area, applied to form the inner portion and outer line of adhesive combined is between 0.3 and 0.6 g/dm².

12. The method of any of the preceding claims, wherein applying the device to the tyre comprises first applying pressure to a centre of the device and moving the pressure outwards towards the outer of the device.

13. The method of any of the preceding claims, wherein applying the device to the tyre comprises applying between 80 and 120 kPa of pressure.

14. The method of any of the preceding claims, wherein applying the device to the tyre comprises applying the pressure for between 1 and 180 seconds.

15. A method for manufacturing a tyre comprising the method according to claims 1 to 14.

## Patentansprüche

1. Verfahren zum Kleben einer Vorrichtung (10, 20) an einen Reifen (30), das Verfahren umfassend: Aufbringen von Klebstoff auf eine Oberfläche der Vorrichtung (10, 20), wobei das Aufbringen von Klebstoff umfasst:
Aufbringen eines inneren Abschnitts (14, 34) aus Klebstoff auf die Oberfläche der Vorrichtung (10, 20); und
Aufbringen einer äußeren Linie (16, 32) aus Klebstoff auf die Oberfläche der Vorrichtung (10, 20), wobei die äußere Linie (16, 32) aus Klebstoff den inneren Abschnitt (14, 34) aus Klebstoff mindestens teilweise umgibt;
das Verfahren ferner umfassend:
Anbringen der Vorrichtung (10, 20) an dem Reifen (30), wobei das Anbringen der Vorrichtung (10, 20) an dem Reifen (30) umfasst:
Aufbringen von Druck auf die Vorrichtung (10, 20), um den inneren Abschnitt (14, 34) und die äußere Linie (16, 32) aus Klebstoff über die Vorrichtung (10, 20) zum Erzeugen eines gleichmäßigen Films aus Klebstoff zwischen der Vorrichtung (10, 20) und dem Reifen (30) zu verteilen.

2. Verfahren nach Anspruch 1, wobei es sich bei dem inneren Abschnitt aus Klebstoff und der äußeren Linie aus Klebstoff um den gleichen Klebstoff handelt.

3. Verfahren nach Anspruch 1 oder 2, wobei es sich bei der Vorrichtung um ein Funkfrequenzidentifizierungspatch (RFID-Patch) oder eine halterartige Vorrichtung zum Halten eines Sensors handelt.

4. Verfahren nach einem der vorstehenden Ansprüche, wobei es sich bei dem inneren Abschnitt aus Klebstoff um eine innere Linie aus Klebstoff handelt.

5. Verfahren nach einem der vorstehenden Ansprüche, wobei die äußere Linie aus Klebstoff von dem inneren Abschnitt aus Klebstoff getrennt und verschieden ist.

6. Verfahren nach einem der vorstehenden Ansprüche, wobei der innere Abschnitt aus Klebstoff auf oder entlang einer Mittellinie der Vorrichtung aufgebracht wird.

7. Verfahren nach einem der vorstehenden Ansprüche, wobei die äußere Linie aus Klebstoff eine Form, die dem äußeren Profil der Vorrichtung entspricht, definiert.

8. Verfahren nach einem der vorstehenden Ansprüche, wobei es sich bei der äußeren Linie aus Klebstoff um eine ununterbrochene Linie handelt, die den inneren Abschnitt aus Klebstoff vollständig umgibt.

9. Verfahren nach einem der vorstehenden Ansprüche, wobei der Abstand zwischen einer äußeren Kante der Vorrichtung und der äußeren Linie aus Klebstoff größer als ein Achtel und kleiner als drei Viertel des Abstands zwischen der äußeren Kante der Vorrichtung und dem inneren Abschnitt aus Klebstoff ist.

10. Verfahren nach einem der vorstehenden Ansprüche, wobei die Menge an Klebstoff, die aufgebracht wird, um den inneren Abschnitt aus Klebstoff auszubilden, zwischen 80 % und 120 % der Menge an Klebstoff, die aufgebracht wird, um die äußere Linie aus Klebstoff auszubilden, beträgt.

11. Verfahren nach einem der vorstehenden Ansprüche, wobei die Gesamtmenge an Klebstoff, in Gramm pro Oberflächenbereich, die aufgebracht wird, um den inneren Abschnitt und die äußere Linie aus Klebstoff auszubilden, kombiniert zwischen 0,3 und 0,6 g/dm² beträgt.

12. Verfahren nach einem der vorstehenden Ansprüche, wobei das Anbringen der Vorrichtung an dem Reifen zunächst das Aufbringen von Druck auf eine Mitte der Vorrichtung und ein Verschieben des Drucks nach außen in Richtung der Außenseite der Vorrichtung umfasst.

13. Verfahren nach einem der vorstehenden Ansprüche, wobei das Anbringen der Vorrichtung an dem Reifen das Aufbringen von Druck zwischen 80 und 120 kPa umfasst.

14. Verfahren nach einem der vorstehenden Ansprüche, wobei das Anbringen der Vorrichtung an dem Reifen das Aufbringen des Drucks für zwischen 1 und 180 Sekunden umfasst.

15. Verfahren zum Herstellen eines Reifens, umfassend das Verfahren nach den Ansprüchen 1 bis 14.

## Revendications

1. Procédé d'adhésion d'un dispositif (10, 20) à un pneu (30), le procédé comprenant : l'application d'un adhésif à une surface du dispositif (10, 20), dans lequel l'application d'un adhésif comprend :
l'application d'une partie interne (14, 34) d'un adhésif à la surface du dispositif (10, 20) ; et
l'application d'une ligne externe (16, 32) d'un adhésif à la surface du dispositif (10, 20), dans lequel la ligne externe (16, 32) d'un adhésif entoure au moins partiellement la partie interne (14, 34) d'un adhésif ;
le procédé comprenant en outre :
l'application d'un dispositif (10, 20) au pneu (30), dans lequel l'application du dispositif (10, 20) au pneu (30) comprend :
l'application d'une pression au dispositif (10, 20) pour étaler la partie interne (14, 34) et la ligne externe (16, 32) d'un adhésif sur le dispositif (10, 20) afin de créer un film uniforme d'un adhésif entre le dispositif (10, 20) et le pneu (30).

2. Procédé selon la revendication 1, dans lequel la partie interne d'un adhésif et la ligne externe d'un adhésif sont le même adhésif.

3. Procédé selon la revendication 1 ou la revendication 2, dans lequel le dispositif est une plaque d'identification par radiofréquence (RFID), ou un dispositif de type support destiné à soutenir un capteur.

4. Procédé selon l'une quelconque des revendications précédentes, dans lequel la partie interne d'un adhésif est une ligne interne d'un adhésif.

5. Procédé selon l'une quelconque des revendications précédentes, dans lequel la ligne externe d'un adhésif est séparée et distincte de la partie interne d'un adhésif.

6. Procédé selon l'une quelconque des revendications précédentes, dans lequel la partie interne d'un adhésif est appliquée sur ou le long d'une ligne centrale du dispositif.

7. Procédé selon l'une quelconque des revendications précédentes, dans lequel la ligne externe d'un adhésif définit une forme correspondant au profil extérieur du dispositif.

8. Procédé selon l'une quelconque des revendications précédentes, dans lequel la ligne externe d'un adhésif est une ligne ininterrompue qui entoure entièrement la partie interne d'un adhésif.

9. Procédé selon l'une quelconque des revendications précédentes, dans lequel la distance entre un bord externe du dispositif et la ligne externe d'un adhésif est supérieure à un huitième et inférieure à trois quarts de la distance entre le bord externe du dispositif et la partie interne d'un adhésif.

10. Procédé selon l'une quelconque des revendications précédentes, dans lequel la quantité d'un adhésif appliquée pour former la partie interne d'un adhésif est comprise entre 80 % et 120 % de la quantité d'un adhésif appliquée pour former la ligne externe d'un adhésif.

11. Procédé selon l'une quelconque des revendications précédentes, dans lequel la quantité totale d'adhésif, en grammes par superficie, appliquée pour former la partie interne et la ligne externe d'un adhésif combinées est comprise entre 0,3 et 0,6 g/dm².

12. Procédé selon l'une quelconque des revendications précédentes, dans lequel l'application du dispositif au pneu comprend d'abord l'application d'une pression à un centre du dispositif et le déplacement de la pression vers l'extérieur du dispositif.

13. Procédé selon l'une quelconque des revendications précédentes, dans lequel l'application du dispositif au pneu comprend l'application d'une pression comprise entre 80 et 120 kPa.

14. Procédé selon l'une quelconque des revendications précédentes, dans lequel l'application du dispositif au pneu comprend l'application de la pression pendant 1 et 180 secondes.

15. Procédé de fabrication d'un pneu comprenant le procédé selon les revendications 1 à 14.
